# EUROPEAN PATENT APPLICATION

(11) **EP 4 782 473 A1**
(43) Date of publication of application: **29.07.2026**
(21) Application number: 25153876.5
(22) Date of filing: 24.01.2025
(51) Int. Cl.: C08G 18/40, C08G 18/42, C08G 18/48, C08G 18/50, C08G 18/76, C09J 175/06, C09J 175/08

(54) **THERMALLY DEBONDABLE HOTMELT COMPOSITION**

(71) Applicant: Henkel AG & Co. KGaA, 40589 Düsseldorf (DE)
(72) Inventor: Heida, Thomas, 40721 Hilden (DE); Franken, Uwe, 41542 Dormagen (DE)

(57) **Abstract**

The present invention relates to a thermally debondable hotmelt composition comprising a) a polyester; b) a di-functional isocyanate; c) a copolymer of methyl methacrylate and n-butyl methacrylate; d) an amine having a structure I 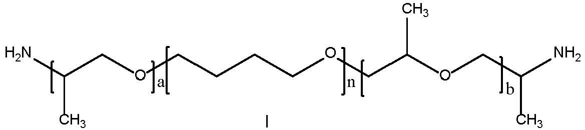 wherein a is an integer from 1 to 5, n is an integer from 1 to 20 and b is an integer from 1 to 5; and e) an amine having a structure II 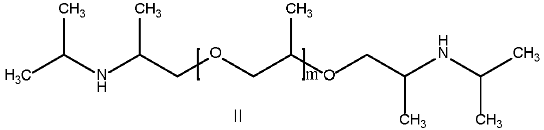 wherein m is an integer from 1 to 20 and/or a di- or tri- functional polyol. The thermally debondable hotmelt composition is suitable for use in bonded structures which may be in batteries of electronic vehicles and consumer electronics.

## Description

### Technical field of the invention

The present invention relates to a thermally debondable hotmelt composition.

### Background of the invention

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature might be effective but can be time consuming and complex to perform: moreover, the aggressive chemicals and/or harsh conditions required can damage the substrates being separated, rendering them unsuitable for subsequent applications.

As an exemplary case, it is evidently desirable to remove, replace and / or recycle components of automotive industry, such as electric car battery cells and casque, which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes or the application of chemicals.

Certain authors have sought to develop debondable adhesive compositions wherein the applied heat is used to disrupt the bonding at the interface of the adhesive and the substrate. The problem with the thermal debonding is that if a care is not taken, high temperatures may damage the substrates.

Noting these problems, certain authors have also sought to develop debondable adhesive compositions, wherein the passage of an electrical current through the cured compositions acts to disrupt the bonding at the interface of the adhesive and the substrate.

Also, water-based systems and UV activated acrylates have been used in the past as debonding adhesive layers. However, despite of the good debonding efficacy, the adhesion strength at room temperature, the poor adhesion on substrates like PP, PET or e-coated steel, and the poor compatibility with polyurethane thermal conductive adhesive were found dissatisfactory.

Therefore, there remains a need in the art to provide means to effectively debond bonded substrates, especially bonded structures in batteries of electronic vehicles and consumer electronics, while maintaining optimum adhesion and mechanical properties of the adhesive.

### Summary of the invention

The present invention relates to a thermally debondable hotmelt composition comprising a) a polyester, b) a di-functional isocyanate, c) a copolymer of methyl methacrylate and n-butyl methacrylate, d) an amine having a structure I 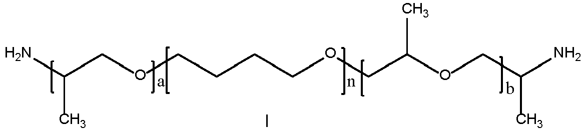
wherein a is an integer from 1 to 5, n is an integer from 1 to 20 and b is an integer from 1 to 5; and
e) an amine having a structure II 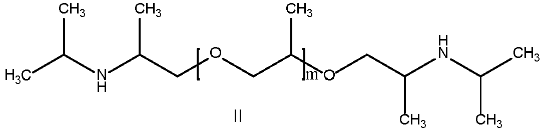
wherein m is an integer from 1 to 20
or a di- or tri- functional polyol.

The present invention also relates to a thermally settled thermally debondable hotmelt composition according to the present invention.

The present invention encompasses use of thermally debondable hotmelt composition or thermally settled product according to the present invention in a bonded structure.

The present invention also encompasses a bonded structure comprising: a first substrate, a second substrate, a thermally debondable hotmelt composition layer or thermally settled product layer according to the present invention, and an adhesive layer, wherein the thermally debondable hotmelt composition is disposed on a surface of the first substrate and/or on a surface of the second substrate and wherein the adhesive layer is placed on top of the thermally debondable hotmelt composition layer.

The present invention also relates to a method of debonding said bonded structure according to the present invention, the method comprising the steps of: i) applying a heat, and, ii) debonding the surface, wherein the temperature applied in step i) is preferably from 80 to 100°C, and is preferably applied for a duration of from 2 minutes to 60 minutes.

Short summary of the figures
Figure 1 illustrates a schematic depiction of sample preparation and disassembly upon thermal activation of the debonding layer.
Figure 2 illustrates tensile lap shear strength of TEROSON EP 5065 combined with thin hotmelt layers according to the present invention (examples 1-3) and commercially available hotmelt on aluminium substrates at varying temperatures.
Figure 3 illustrates tensile lap shear strength of TEROSON EP 5065 combined with thin example 4a and example 5 layers on aluminium substrates at varying temperatures.
Figure 4 illustrates Tensile lap shear strength of TEROSON EP 5065 combined with thin example 4 layers on Kathoguard 800-coated steel (left)) and Kathoguard 580-coated steel (right) substrates at varying temperatures.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps.

As used herein, the term *"consisting of*" excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

The term "*hot melt*" as used herein describes a composition that is substantially non-flowable at room temperature, but converts to a flowable state at an elevated, application temperature of, for example, from 100° to 160°C, preferably 130°C.

As used herein, room temperature is 23°C plus or minus 2°C. As used herein, *"ambient conditions"* means the temperature and pressure of the surroundings in which the composition is located or in which a coating layer or the substrate of said coating layer is located.

As used herein the term *"debondable"* means that, after curing of the adhesive, the bond strength can be weakened by at least 50% upon application of temperature of from 80 to 200 °C for a duration of from 2 to 60 minutes. Bond strength is measured by Tensile Lap Shear (TLS) test performed at room temperature and based upon EN 1465:2009 (German version) Based on Adhesives - Determination of tensile lap-shear strength of bonded assemblies.

The present invention relates to a thermally debondable hotmelt composition comprising a) a polyester, b) a di-functional isocyanate, c) a copolymer of methyl methacrylate and n-butyl methacrylate, d) an amine having a structure I 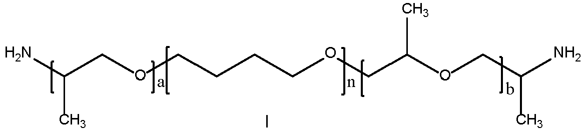 wherein a is an integer from 1 to 5, n is an integer from 1 to 20 and b is an integer from 1 to 5; and
e) an amine having a structure II 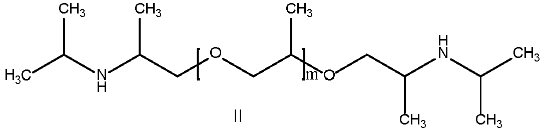 wherein m is an integer from 1 to 20
or a di- or tri- functional polyol.

The composition according to the present invention provides excellent adhesion on aluminium and KTL-coated steel.

The composition according to the present invention also provides outstanding thermal resistance at elevated temperatures (60°C) and, at the same time, significant reduction of initial strength after thermal activation above debonding temperature (>80°C) for on-demand component disassembly.

The composition according to the present invention the reuse, repurpose and recycling of e-mobility components, e.g. battery modules, lids, and cells.

The thermally debondable hotmelt composition according to the present invention comprises a polyester.

The polyester enhances softening point of the cured material.

Suitable polyester for use in the present invention is preferably a crystalline polyester polyol. The crystalline polyester polyol may be obtained by reacting at least one diol selected from the group consisting of cycloaliphatic diols having a carbon chain of at least 3 carbon atoms up to 20 carbon atoms, aliphatic diols having a carbon chain of at least 2 carbon atoms up to 20 carbon atoms, and combinations thereof and at least one diacid selected from the group consisting of aliphatic diacids having a carbon chain of at least 10 carbon atoms up to 20 carbon atoms, aromatic diacids having a carbon chain of at least 10 carbon atoms up to 20 carbon atoms, and mixtures thereof.

Preferably the crystalline polyester polyol is obtained by reacting ethylene glycol and diacid selected from the group consisting of 1,12-dodecanedioic acid, 1,14-tetradecanedioic acid, sebacic acid, and mixtures thereof, more preferably the crystalline polyester polyol is obtained by reacting ethylene glycol and 1,14-tetradecanedioic acid.

Suitable commercially available polyester for use in the present invention include but is not limited to Dynacoll 7490 from Evonik.

The polyester may be present in the thermally debondable hotmelt composition according to the present invention in a quantity from 25 to 60% by weight of the total weight of the composition, preferably from 30 to 55% and more preferably from 35 to 50%.

If the quantity of the polyester is too low, less than 25%, the adhesion properties of the composition may be poor and it also may lead to no debonding effect, whereas too high quantities, more than 60%, may lead to a brittle and stiff hotmelt layer.

The thermally debondable hotmelt composition according to the present invention comprises a di-functional isocyanate.

The di-functional isocyanate functions as a cross-linker in the composition according to the present invention.

Preferably the di-functional isocyanate is aliphatic or aromatic diisocyanate, more preferably selected from the group consisting of diphenylmethane-4,4'-disoocyanate, diphenylmethane-2,4'-disoocyanate, diphenylmethane-2,2'-disoocyanate, isophorone diisocyanate, m-xylylene diisocyanate and mixtures thereof, more preferably the di-functional isocyanate is diphenylmethane-4,4'-diisocyanate.

Suitable commercially available di-functional isocyanate for use in the present invention include but is not limited to Desmodur 44 M flakes from Covestro.

The di-functional isocyanate may be present in the thermally debondable hotmelt composition according to the present invention in a quantity from 8 to 20% by weight of the total weight of the composition, preferably from 9 to 19% and more preferably from 10 to 18%.

Too low quantities, less than 8%, may lead to low crosslinking density, and hence poor performance, whereas too high quantities, more than 20%, may lead to significantly lower viscosities and high excess of non-reacted NCO-moieties yielding brittle films.

The thermally debondable hotmelt composition according to the present invention comprises a copolymer of methyl methacrylate and n-butyl methacrylate.

The copolymer of methyl methacrylate and n-butyl methacrylate is non-functional, and it does not react, but is physically trapped to prepolymer. The copolymer of methyl methacrylate and n-butyl methacrylate enhances adhesion to metallic substrates.

Preferably the copolymer of methyl methacrylate and n-butyl methacrylate has a molecular weight from 30000 to 36500 g/mol, preferably about 35000 g/mol, wherein the molecular weight is measured with gel permeation chromatography (GPC) using polystyrene calibration standards, such as is done according to ASTM 3536.

These molecular weights are preferred because they provide balance between adhesion and viscosity properties.

Suitable commercially available copolymer of methyl methacrylate and n-butyl methacrylate for use in the present invention include but is not limited to Dynacoll AC 1620 from Evonik.

The copolymer of methyl methacrylate and n-butyl methacrylate may be present in the thermally debondable hotmelt composition according to the present invention in a quantity from 15 to 30% by weight of the total weight of the composition, preferably from 17 to 28% and more preferably from 15 to 26%.

Too low quantities, less than 15%, may lead to overall poor adhesion to metallic substrates, whereas too high quantities, more than 30%, may lead to dramatic viscosity increase preventing the film to be applied.

The thermally debondable hotmelt composition according to the present invention comprises an amine having a structure I 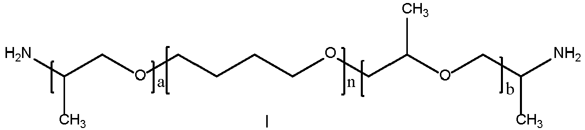 wherein
a is 1-3,
n is 5-8 and
bis1.

The amine having a structure I promotes urea and urethane bonds which provides high bond strength at 60 °C, while heating up to 100 °C the bond strength decreased to the point of debonding.

In a preferred embodiment the amine having a structure I is 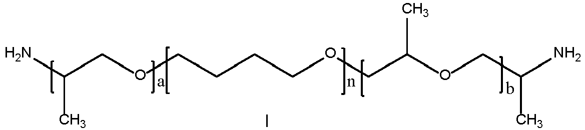 wherein
a is 1-3,
n is 5-8, and
b is 1.

Suitable commercially available amine having a structure I for use in the present invention include but is not limited to Jeffamine THF 100 from Huntsman.

The amine having a structure I may be present in the thermally debondable hotmelt composition according to the present invention in a quantity from 2 to 20% by weight of the total weight of the composition, preferably from 3 to 15% and more preferably from 4 to 12%.

Too low quantities, less than 2%, may lead to no effect to performance at all, whereas too high quantities, more than 20%, may lead to unintended curing during pre-polymerization and leading to non-remeltable product.

The thermally debondable hotmelt composition according to the present invention comprises an amine having a structure II 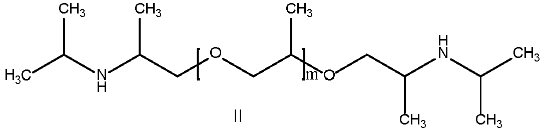 wherein m is an integer from 1 to 20
and/or di- or tri- functional polyol.

The amine having a structure II promotes urea and urethane bonds which provides high bond strength at 60 °C, while heating up to 100 °C the bond strength decreased to the point of debonding.

In a preferred embodiment the amine having a structure II is 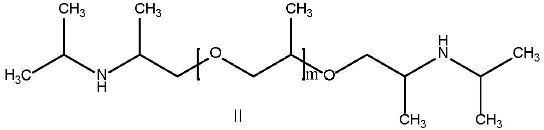 wherein m is 3-7.

Suitable commercially available amine having a structure II for use in the present invention include but is not limited to Jeffamine SD 2001 from Hunstman.

In some embodiments, the thermally debondable hotmelt composition according to the present invention comprises a di- or tri functional polyol.

The di- or tri functional polyol takes part on polyurethane prepolymerisation and promotes elasticity and viscosity for the prepolymer.

The di- or tri- functional polyol may be selected from the group consisting of polyoxypropylene glycol, polytetrahydrofuran, trifunctional polyether polyol with primary OH-groups and mixtures thereof.

The above listed polyols are selected as they are enabling sufficient mixing of the acrylates with polyesters.

Suitable commercially available polyols for use in the present invention include but are not limited to Caradol ED56-300 from Shell, and Lupranol 2095 from BASF.

The amine having a structure II and/or the di- or tri- functional polyol may be present in the thermally debondable hotmelt composition according to the present invention in a quantity from 5 to 20% by weight of the total weight of the composition, preferably from 6 to 18% and more preferably from 8 to 16%.

Too low amine having structure II quantities, below 5%, may lead to no effect to performance at all, whereas too high quantities, more than 20%, may lead to unstable composition with high viscosity.

Too low polyol quantities, below 5%, may lead to immiscibility of the polyacrylates with polyesters and too high viscosity as it may act as a dissolver, whereas too high quantities, more than 20%, may lead to too low viscosity.

The composition may further comprise a wetting agent.

The wetting agent eases adhesive's contact and spread over a given substrate and also aids degassing.

The type of the wetting agent is not particularly limited for this invention and can be any wetting agent as long as it does not adversely affect to other properties.

In a preferred embodiment the thermally debondable hotmelt composition comprises a copolycrylate wetting agent.

Suitable commercially available wetting agent for use in the present invention include but is not limited to Efka FL 3740 from BASF.

The wetting agent may be present in the thermally debondable hotmelt composition according to the present invention in a quantity from 0.01 to 5% by weight of the total weight of the composition, preferably from 0.05 to 2% and more preferably from 0.05 to 0.7%.

Too low wetting agent quantities, less than 0.01%, may lead to no effect to performance at all, whereas too high quantities, more than 5%, may lead to the component to behave as a plasticiser, which is not desired.

The thermally debondable hotmelt composition according to the present invention can be prepared in one-pot reaction.

In one-pot reaction all components, which are non-reactive or OH-modified are added first and degassed. In the subsequent step diisocyanate component is added and NCO's of the diisocyanate component react at the same time with all the OH-components already placed in the reaction mixture. In other words, in the one-pot synthesis all reactive components react with each other at the same time. This is in contrast with multiple pot reactions, wherein, the reaction starts with NCO-reactants, and after each addition, the reactants need to be dried by vacuum.

The present invention relates to a thermally settled thermally debondable hotmelt composition according to the present invention.

The present invention relates to use of thermally debondable hotmelt composition or thermally settled product according to the present invention in a bonded structure.

The present invention relates to a bonded structure comprising: a first substrate; a second substrate; a thermally debondable hotmelt composition layer or thermally settled product layer according to the present invention; and an adhesive layer, wherein the thermally debondable hotmelt composition is disposed on a surface of the first substrate and/or on a surface of the second substrate and wherein the adhesive layer is placed on top of the thermally debondable hotmelt composition layer.

The bonded structure may be in batteries of electronic vehicles and consumer electronics.

The first and second substrates can be same or different and not limited to any particular substrate material. However, suitable substrate should have a temperature stability below debonding temperature and melting point above 100°C.

Suitable substrates for use in the present invention are, but not limited to aluminium, aluminium alloys, e-coated steel, and PET coated aluminium, KTL-coated steel.

Suitable adhesive used to form the adhesive layer may be one component (1k) composition or a two component (2k) composition. The adhesive layer is preferably formed from an adhesive selected from the group consisting of epoxy adhesives, acrylic adhesives, polyurethane adhesives, cyanoacrylate adhesives, silicone adhesive, polyimide adhesives, silane modified polymers, butyls, hotmelts and mixtures thereof.

Suitable commercially available adhesive for use in the present invention include but are not limited to Teroson EP 5065, LOCTITE TLB9150APS and Teroson MS 939 from Henkel AG & Co. KGaA.

Examples of bonded structures are automotive components such as a battery, a casque and interior parts. Specific, non-limiting examples of e-mobility components are a battery lid, battery cells (cell-to-cell, cell-to-module, cell-to-body), battery modules, inverter, converter, and various structural adhesive applications and various thermally conductive applications.

The present invention encompasses a method of debonding the bonded structure according to the present invention, the method comprising the steps of: i) applying a heat; and, ii) debonding the surface, wherein the temperature applied in step i) is preferably from 80 to 100°C, and is preferably applied for a duration of from 2 minutes to 60 minutes.

The heat may be applied for example by inductive heating, infra red, heat gun and hot plate.

The activation temperature for debonding is optimized for battery applications to not influence the battery performance.

Upon detachment, the softened debonding layer can be mechanically removed for reusing disassembled parts.

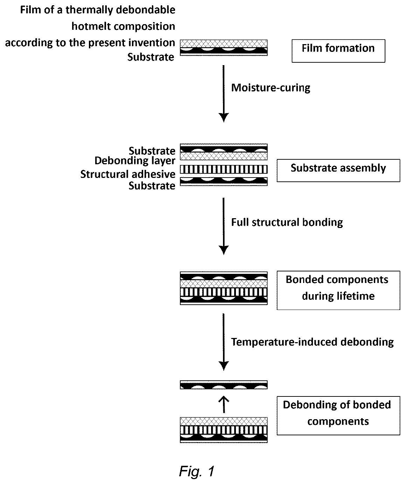

Figure 1 is a schematic depiction of sample preparation and disassembly upon thermal activation of the debonding layer.

### Examples

Formulations for examples 1-5 were prepared in accordance with the compositional information provided in Table 1 below.

**Table 1**

| Component | Example 1 (wt. %) | Example 2 (wt. %) | Example 3 (wt. %) | Example 4 (wt. %) | Example 5 (wt. %) |
|---|---|---|---|---|---|
| Dynacoll AC 1620 from Evonik | 23.09 | 22.79 | 23.09 | 23.09 | 23.09 |
| Dynacoll 7490 from Evonik | 42.54 | 42.11 | 42.74 | 42.54 | 43.24 |
| Caradol ED56-300 from Shell | 12.17 | 8 | | 5.17 | |
| Lupranol 2095 from BASF | | | | | 2 |
| Jeffamine THF 100 from Huntsman | 8 | 12 | 8 | 8 | 8 |
| Jeffamine SD 2001 from Hunstman | | | 12.17 | | 12.17 |
| Efka FL 3740 from BASF | 0.2 | 0.2 | 0.2 | 0.2 | 0.2 |
| Poly THF 2000 from BASF | | | | 7 | |
| Desmodur 44 M flakes from Covestro | 14 | 14.9 | 13.8 | 14 | 13.8 |
| | 100 | 100 | 100 | 100 | 100 |

The compositions were prepared according to the one-pot synthesis described in the description above.

### Substrates pre-treatment

The substrates were rubbed with a piece of paper socked in iPrOH and dried at room temperature. In case of aluminium substrates, an additional wiping step was performed using Bonderite M-NT 1455 W Wipes from Henkel to increase the surface polarity, and thereby overall improve the adhesion of both, the structural adhesive (2K epoxide resin TEROSON EP 5065 from Henkel) and the moisture-curing PU-hotmelt layer according to examples 1-5.

Aluminium substrates (100mm x 25 mm x 2 mm), Cathoguard 800-coated KTL substrates (100mm x 25 mm x 2 mm), and Cathoguard 580-coated KTL substrates (100mm x 25 mm x 2 mm) from Rocholl.

### Sample preparation for Lap Shear measurements

After substrate pre-treatment, as detailed in above, the specimens were prepared as follows: prior to joining the samples, the hotmelt formulations of examples 1-5 and commercially available hot melt adhesive (Technomelt 4661 from Henkel) were melted at 130°C and directly bar-coated with a thickness of approximately 100 µm onto a substrate, which was pre-heated at 130°C to allow for optimized surface wetting. After cooling to room temperature and moisture-curing of the hotmelt, the substrate-applied debonding layer was overlayered with a structural adhesive (2K epoxide resin TEROSON EP 5065 from Henkel) to give a joint surface of 25 mm x 10 mm, whereas the bondline thickness was controlled by gap tapes giving a height of 1.5 mm. Upon placing a second substrate on top, access adhesive was removed, and the specimens were cured at 23°C for 7 days.

Tensile Shear Strength between 23°C and 100°C of TEROSON EP 5065 combined with different types of HMPUR debonding layers on aluminium or KTL-coated steel

The Lap Shear Strength of TEROSON EP 5065 combined with examples 1-3 and commercially available hot melt (Technomelt 4661 from Henkel) on aluminium was measured at temperatures between 23°C and 100°C.

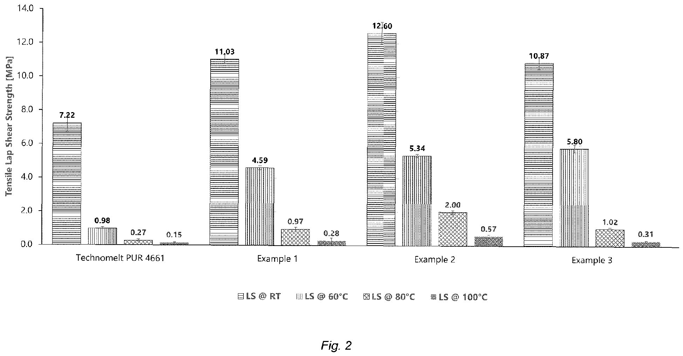

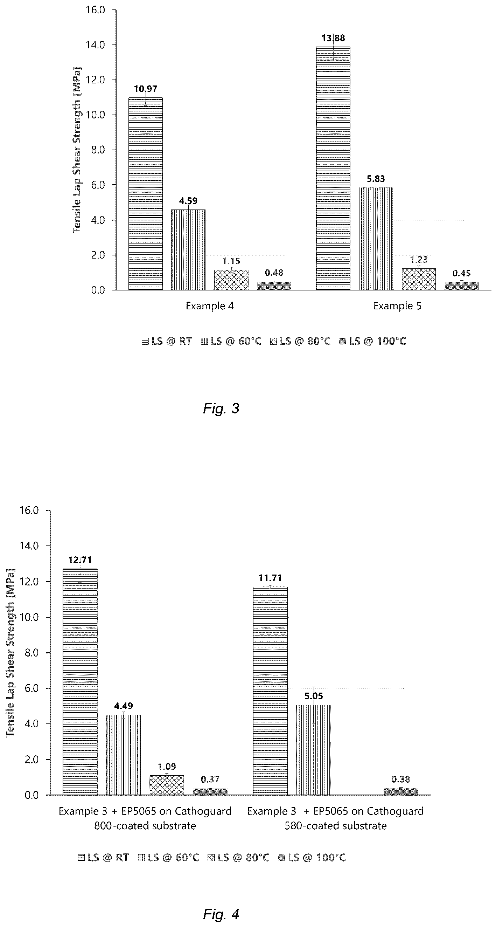

The results are illustrated in Figure 2. With regards to the debonding of battery components, a sufficient strength at 23°C and 60°C is crucial to match application requirements, while at the same time, a significant drop of strength at temperatures between 80°C and 100°C is essential for easy detachment of jointed parts. Although HMPUR systems are generally known as high performance materials, their lack of providing both, thermal resistance and dependability at the same time, currently hinders their application in e-mobility applications. This fact is illustrated in Figure 2, which shows the temperature-dependent lab shear strength of a commercial HMPUR (Technomelt 4661), which is stated to provide high initial strength, high heat resistance, and excellent adhesion to metall. Compositions according to the present invention, which contain urea-moieties and thereby not only provide superior adhesion on metal substrates but also give outstanding temperature stability. As illustrated in Figure 2, urethane-moieties (Technomelt 4661) against urea-moieties, the lab shear strength at 60°C can be increased from 4.6 MPa (Example 1) over 5.3 MPa (Example 2) up to 5.8 MPa (Example 3), while the debonding of jointed parts at 100°C is still ensured. Figure 3 illustrates results for Example 4 and Example 5 o aluminium substrate.

Besides this broad modularity, the compositions according to the present invention shows superior performance if applied on different types of KTL-coated surfaces, which additionally broadens the scope of potential battery applications. These results are illustrated in figure 4 for example 3.

## Claims

1. A thermally debondable hotmelt composition comprising
a) a polyester;
b) a di-functional isocyanate;
c) a copolymer of methyl methacrylate and n-butyl methacrylate;
d) an amine having a structure I 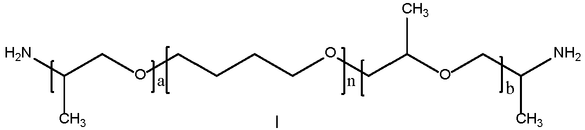 wherein
a is an integer from 1 to 5,
n is an integer from 1 to 20 and
b is an integer from 1 to 5; and
e) an amine having a structure II 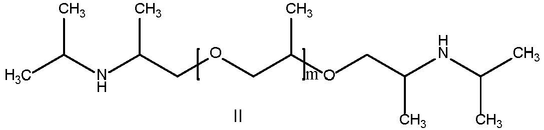 wherein m is an integer from 1 to 20
and/or
a di- or tri- functional polyol.

2. The thermally debondable hotmelt composition according to claim 1, wherein the polyester is a crystalline polyester polyol obtained by reacting at least one diol selected from the group consisting of cycloaliphatic diols having a carbon chain of at least 3 carbon atoms up to 20 carbon atoms, aliphatic diols having a carbon chain of at least 2 carbon atoms up to 20 carbon atoms, and combinations thereof and at least one diacid selected from the group consisting of aliphatic diacids having a carbon chain of at least 10 carbon atoms up to 20 carbon atoms, aromatic diacids having a carbon chain of at least 10 carbon atoms up to 20 carbon atoms, and mixtures thereof, preferably the crystalline polyester polyol is obtained by reacting ethylene glycol and diacid selected from the group consisting of 1,12-dodecanedioic acid, 1,14-tetradecanedioic acid, sebacic acid, and mixtures thereof, more preferably the crystalline polyester polyol is obtained by reacting ethylene glycol and 1,14-tetradecanedioic acid.

3. The thermally debondable hotmelt composition according to claim 1 or 2, wherein the polyester is present in a quantity from 25 to 60% by weight of the total weight of the composition, preferably from 30 to 55% and more preferably from 35 to 50%.

4. The thermally debondable hotmelt composition according to any one of claims 1 to 3, wherein the di-functional isocyanate is aliphatic or aromatic diisocyanate, preferably selected from the group consisting of diphenylmethane-4,4'-disoocyanate, diphenylmethane-2,4'-disoocyanate, diphenylmethane-2,2'-disoocyanate, isophorone diisocyanate, m-xylylene diisocyanate and mixtures thereof, more preferably the di-functional isocyanate is diphenylmethane-4,4'-diisocyanate.

5. The thermally debondable hotmelt composition according to any one of claims 1 to 4, wherein the di-functional isocyanate is present in a quantity from 8 to 20% by weight of the total weight of the composition, preferably from 9 to 19% and more preferably from 10 to 18%.

6. The thermally debondable hotmelt composition according to any one of claims 1 to 5, wherein the copolymer of methyl methacrylate and n-butyl methacrylate has a molecular weight from 30000 to 36500 g/mol, preferably about 35000 g/mol, wherein the molecular weight is measured with gel permeation chromatography (GPC) using polystyrene calibration standards, such as is done according to ASTM 3536.

7. The thermally debondable hotmelt composition according to any one of claims 1 to 6, wherein the copolymer of methyl methacrylate and n-butyl methacrylate is present in a quantity from 15 to 30% by weight of the total weight of the composition, preferably from 17 to 28% and more preferably from 15 to 26%.

8. The thermally debondable hotmelt composition according to any one of claims 1 to 7, wherein the amine having a structure I is 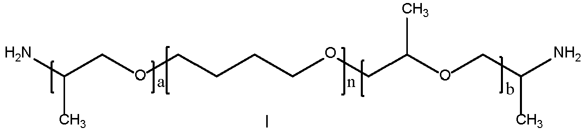 wherein
a is 1-3,
n is 5-8, and
b is 1.

9. The thermally debondable hotmelt composition according to any one of claims 1 to 8, wherein the amine having a structure I is present in a quantity from 2 to 20% by weight of the total weight of the composition, preferably from 3 to 15% and more preferably from 4 to 12%.

10. The thermally debondable hotmelt composition according to any one of claims 1 to 9, wherein the amine having a structure II is 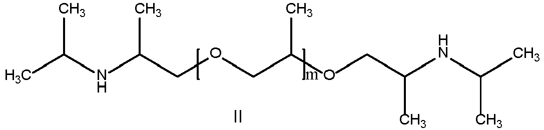 wherein m is 3-7.

11. The thermally debondable hotmelt composition according to any one of claims 1 to 10, wherein the di- or tri- functional polyol is selected from the group consisting of polyoxypropylene glycol, polytetrahydrofuran, trifunctional polyether polyol with primary OH-groups and mixtures thereof.

12. The thermally debondable hotmelt composition according to any one of claims 1 to 11, wherein the amine having a structure II and/or the di- or tri- functional polyol is present in a quantity from 5 to 20% by weight of the total weight of the composition, preferably from 6 to 18% and more preferably from 8 to 16%.

13. Thermally settled thermally debondable hotmelt composition according to any of claims 1 to 12.

14. Use of thermally debondable hotmelt composition according to any of claims 1 to 12 or thermally settled product according to claim 13 in a bonded structure.

15. A bonded structure comprising:
a first substrate;
a second substrate;
a thermally debondable hotmelt composition layer according to any one of claims 1 to 12 or thermally settled product layer according to claim 13; and
an adhesive layer,
wherein the thermally debondable hotmelt composition is disposed on a surface of the first substrate and/or on a surface of the second substrate and wherein the adhesive layer is placed on top of the thermally debondable hotmelt composition layer.

16. A method of debonding said bonded structure according to claim 15, the method comprising the steps of:
i) applying a heat; and,
ii) debonding the surface,
wherein the temperature applied in step i) is preferably from 80 to 100°C, and is preferably applied for a duration of from 2 minutes to 60 minutes.
